# EUROPÄISCHE PATENTSCHRIFT

(11) **EP 4 086 494 B1**
(45) Veröffentlichungstag und Bekanntmachung des Hinweises auf die Patenterteilung: **02.04.2025**
(21) Anmeldenummer: 21172128.7
(22) Anmeldetag: 04.05.2021
(51) Int. Cl.: F16L 13/14, F16L 21/03

(54) **DICHTRINGANORDNUNG**
SEALING RING ASSEMBLY
AGENCEMENT DE BAGUE D'ÉTANCHÉITÉ

(43) Veröffentlichungstag der Anmeldung: 09.11.2022
(73) Patentinhaber: Geberit International AG, 8645 Jona (CH)
(72) Erfinder: DEJAKUM, Roger, 9630 Wattwil (CH); HAUSHEER, Roman, 6313 Menzingen (CH); LÜTHY, Markus, 8708 Männedorf (CH)
(74) Vertreter: Frischknecht, Harry Ralph

(56) Entgegenhaltungen:
- WO-A1-2014/002745
- DE-C1- 19 840 668
- LT-B- 3 515
- US-A1- 2010 025 992

## Beschreibung

### TECHNISCHES GEBIET

Die vorliegende Erfindung betrifft eine Anordnung mit einem Fitting, einem Dichtring und einem Rohrabschnitt nach Anspruch 1.

### STAND DER TECHNIK

Aus dem Stand der Technik sind Rohrsysteme, deren Rohre mit Fittings verbunden werden, bekannt. Derartige Fittings werden in einem Verpressvorgang kontrolliert verpresst und durch die Verpressung gegen die Aussenseite des Rohrs gedrückt. Ebenfalls wird eine im Fitting eingelassene Dichtung zusammengedrückt und dichtet den Fitting gegenüber dem Rohr ab. Ein derartiges System wird von der Anmelderin unter der Markenbezeichnung Mapress vertrieben. Die Dokumente LT 3 515 B sowie US 2010/025992 A1 zeigen weitere Anordnungen aus dem Stand der Technik.

Beim Aufstecken des Fittings wird dieser über ein Rohrende aufgeschoben. Das Aufschieben soll dabei möglichst mit einer geringen Kraft erfolgen und zudem soll die Dichtung nicht durch scharfe Kanten am Rohrende beschädigt werden. Solche Beschädigungen führen zu undichten Stellen. Vom Gesichtspunkt der Montage ist es wünschenswert, dass der Fitting nach erfolgtem Aufschieben auf das Rohrende aber vor der Verpressung leicht festgelegt wird. Dies könnte durch eine Verkleinerung des Innendurchmessers der Dichtung erreicht werden. Allerdings ergeht dann das Risiko, dass die Dichtung beim Einschieben des Rohrs durch dessen scharfe Kanten beschädigt wird.

### DARSTELLUNG DER ERFINDUNG

Ausgehend von diesem Stand der Technik liegt der Erfindung eine Aufgabe zugrunde, eine Anordnung mit einem Fitting, einem Dichtring und einem Rohrabschnitt anzugeben, welche einen verbesserten Montageablauf erlaubt. Insbesondere liegt der Erfindung eine Aufgabe zugrunde, eine Anordnung mit einem Fitting, einem Dichtring und einem Rohrabschnitt anzugeben, welche unter der Massgabe einer guten Dichtwirkung einen verbesserten Montageablauf erlaubt.

Diese Aufgabe löst der Gegenstand nach Anspruch 1. Demgemäss umfasst eine Anordnung einen Dichtring, der sich um eine Mittelachse herum erstreckt, einen Fitting mit einer Dichtringaufnahme, in welche der Dichtring eingesetzt ist, einem Aufnahmeraum und einer Presszone, welche mechanisch verpressbar ist, sowie ein Rohr, welches entlang einer Einschubrichtung in den Aufnahmeraum des Fittings einschiebbar ist. Die Dichtringaufnahme weist in Einschubrichtung hinter dem Dichtring gesehen einen freien Raumbereich auf. Der Dichtring ragt mit einem Kontaktabschnitt radial aus der Dichtringaufnahme in den Aufnahmeraum hinein, derart, dass die Stirnseite des Rohrabschnitts beim Einschieben des Rohrabschnitts mit dem Kontaktabschnitt des Dichtrings in Kontakt bringbar ist. Beim Einschieben des Rohrabschnitts in Einschubrichtung wird der Dichtring von einer Ausgangslage in eine Kipplage gekippt, derart, dass der Kontaktabschnitt in Richtung des freien Raumbereichs bewegbar ist und in den freien Raumbereich zu liegen kommt.

Durch das Kippen des Dichtrings ergeht der Vorteil, dass der Dichtring beim Einschieben des Rohrabschnitts bezüglich des Rohrabschnitts weggeschoben, das heisst gekippt wird, wodurch verhindert wird, dass mit allfälligen scharfkantigen Abschnitten am Rohrabschnitt der Dichtring beschädigt wird. Der Dichtring setzt durch dem Kippvorgang dem Rohrabschnitt keinen wesentlichen Widerstand entgegen, wodurch ein Einschneiden durch die scharfkantigen Abschnitt verhindert wird. Bei vollständig eingespannten Dichtungen ist dies anders. Hier ergeht das Problem, dass scharfkantige Abschnitte einen Dichtring beschädigen können, weil der Dichtring lediglich bezüglich seiner Kompressionseigenschaften vom Rohrabschnitt verdrängt werden kann. Durch die Anordnung des freien Raumbereichs entfällt diese Einspannung und der Dichtring kann teilweise in den freien Raumbereich bewegt werden.

Mit dem Kippen des Dichtrings wird auch dessen Innendurchmesser des Dichtrings aufgeweitet. Hierdurch wird eine initiale Haltekraft zwischen Rohrabschnitt und Dichtring bereitgestellt.

Weiter ergeht durch das Kippen des Dichtrings der Vorteil, dass die Reibkräfte zwischen Rohrabschnitt und Dichtring reduziert werden können. Durch das Kippen des Dichtrings verändert sich dessen Form zum Rohrabschnitt ein Vorgang des Einschiebens, wodurch dem Einschubvorgang entgegengesetzte Widerstandskraft kleiner wird.

Der Dichtring führt in der Dichtringaufnahme eine Kippbewegung aus. Das heisst, dass der Dichtring um eine Kipplinie, die sich um die Mittelachse herum erstreckt, gekippt wird. Die Kipplinie liegt dabei im Inneren des Dichtrings. Der Dichtring wird in Einschubrichtung gekippt.

Die Kippfunktion gewährleistet weiter kleine Einschubkräfte und grosse Haltekräfte.

Der Rohrabschnitt kann ein Endbereich eines Rohrs sein. Alternativerweise kann der Rohrabschnitt auch ein Teil eines anderen Fittings bzw. ein Einsteckende eines Fittings sein, welches mit Fitting, der mit der Dichtung ausgerüstet ist, zu verbinden ist.

Die Presszone ist die Zone, welche durch ein Presswerkzeug zusammengepresst wird. Die Presszone erstreckt sich in Richtung der Mittelachse gesehen mindestens über die axiale Ausdehnung des Dichtrings bzw. die axiale Ausdehnung der Dichtringaufnahme. Vorzugsweise erstreckt sich die Presszone aber auch in Bereiche hinein, welche benachbart zum Dichtring liegen. Vorzugsweise schliesst sich der Dichtringaufnahme ein zylindrischer Bereich an, welcher ebenfalls ein Teil der Presszone ist. Bei der Vepressung wird der Fitting gegen die Aussenseite des Rohrabschnitts verpresst. Die Verpressung ist ein mechanischer Umformvorgang.

Vorzugsweise berührt der Dichtring in der Ausgangslage und auch in der Kipplage die Innenseite der Dichtringaufnahme. Hierdurch kann über die Formgebung der Dichtringaufnahme sichergestellt werden, dass der Dichtrig radial zur Mittelachse zentriert ist. Hierdurch wird weiter sichergestellt, dass bei einem winklig zur Mittelachse erfolgten Steckvorgang, der Dichtring nicht aus der Dichtringaufnahme gehebelt wird.

Die Dichtringaufnahme erstreckt sich vom Aufnahmeraum her gesehen radial nach aussen.

Unter einem "freien Raumbereich" wird ein Raumbereich verstanden, welcher nicht durch die Dichtung ausgefüllt ist, wenn die Dichtung in der Ausgangslage ist.

Der Kontaktabschnitt des Dichtrings ist vorzugsweise der Abschnitt des Dichtrings, welcher aus der Dichtringaufnahme in den Aufnahmeraum einragt und dort vom einzuschiebenden Rohrabschnitt kontaktiert werden kann.

Vorzugsweise liegt der Dichtring in der Kipplage derart, dass der Dichtring bei einer Zugkraft entgegen der Einschubrichtung auf das Rohrabschnitt gegen die Aussenseite des Rohrabschnitts gedrückt wird, wodurch ein Herausziehen des Rohrabschnitts entgegen der Einschubrichtung erschwert ist.

Wenn der Rohrabschnitt bis zu seiner Endlage in den Aufnahmeraum eingeschoben wurde, liegt der Dichtring in der Kipplage. Bei einer Trennbewegung zwischen Rohrabschnitt und Fitting müsste der Dichtring von der Kipplage in die Ausgangslage bewegt werden. Der Dichtring steht dabei an der Aussenseite des Rohrabschnitts an und daher wirkt der Dichtring auch als Rückhalteelement. Bei Anwenden einer entsprechenden Kraft ist eine Trennung zwischen Rohrabschnitt und Fitting aber dennoch möglich, wobei dann der Dichtring entsprechend komprimiert werden muss. Mit anderen Worten gesagt, wird mit dem Aufbringen einer Auszugskraft auf den Rohrabschnitt der Dichtring in Richtung seiner Ausgangslage zurückbewegt, was die Anpressung des Dichtrings an den Rohrabschnitt erhöht. Es tritt eine Art Selbstverstärkung ein, bei welcher bei zunehmender Auszugskraft sich die Haltekraft ebenfalls vergrössert. Hierdurch wird die Montagefreundlichkeit erhöht.

Der Innendurchmesser des Dichtrings ist in der Ausgangslage kleiner als der Aussendurchmesser des Rohrabschnitts.

Vorzugsweise weist der Dichtring einen Flächenbereich auf, welcher in der Ausgangslage im Inneren des Aufnahmeraums liegt, derart, dass die Stirnseite des Rohrabschnitts beim Einschieben nicht in Kontakt mit dem Flächenbereich kommt, und welcher bei der Bewegung aus der Ausgangslage in die Kipplage aus dem Inneren des Aufnahmeraums aus dem Aufnahmeraum zur Aussenseite des Rohrabschnitts verschwenkt wird.

Diese Ausbildung hat den Vorteil, dass mit dem Flächenbereich ein Abschnitt geschaffen werden kann, welcher nicht mit den möglicherweise scharfkantigen Abschnitten vom Rohrabschnitt in Kontakt kommt und welcher dann nach erfolgter Verkippung mit der Aussenseite des Rohrabschnitts für die Dichtwirkung in Kontakt bringbar ist. Es wird demnach sichergestellt, dass in jedem Fall ein unbeschädigter Teil des Dichtrings mit dem Rohrabschnitt in Kontakt kommt, was die Prozesssicherheit erhöht.

Vorzugsweise ist der Flächenbereich so angeordnet, dass dieser ausschliesslich mit der Aussenseite, nicht aber mit der Stirnseite des Rohrabschnitts in Kontakt kommt.

Weiter weist der Dichtring eine äussere Umfangslinie, eine innere Umfangslinie und zwei seitliche Umfangslinien auf. Die äussere Umfangslinie und die innere Umfangslinie liegen in einer rechtwinklig zur Mittelachse verlaufenden Ebene. Die seitlichen Umfangslinien liegen in Richtung der Mittelachse gesehen axial beabstandet zueinander. Vorzugsweise liegt besagte Ebene mittig zwischen den beiden seitlichen Umfangslinien.

Die Kontaktierung über die besagten Umfangslinien ist vorteilhaft, weil die Reibkräfte vermindert beim Kippvorgang von der Ausgangslage in die Kipplage gegenüber einem flächigen Anliegen verringert werden können.

Bei der Bewegung des Dichtrings von der Ausgangslage in die Kipplage bewegen sich die Umfangslinien relativ zum feststehenden Aufnahmeraum des Fittings.

Vorzugsweise steht der Dichtring in der Ausgangslage mit der äusseren Umfangslinie und einer der seitlichen Umfangslinien mit den Seitenwänden des Aufnahmeraums in Kontakt. Bei der Bewegung des Dichtrings aus der Ausgangslage in die Kipplage gleiten die äussere Umfangslinie und die seitliche Umfangslinie auf den Seitenwänden des Aufnahmeraums ab.

Die Umfangslinien sind als determinierte Linien an der Aussenfläche des Dichtrings angeordnet. Vorzugsweise erstrecken sich die Umfangslinien vollständig um den Umfang des Dichtrings herum. Die Umfangslinien können aber auch abschnittsweise unterbrochen sein, beispielsweise wenn die unten genannten Durchgänge angeordnet sind.

Vorzugsweise werden die Umfangslinien durch eine Scheitellinie einer jeweiligen konvexen Rundung der Aussenfläche des Dichtrings gebildet werden.

Vorzugsweise weist der Dichtring aussenseitig Flächenabschnitte auf, wobei jeweils ein Flächenabschnitt zwei benachbarte Umfangslinien verbindet; oder wobei jeweils ein Flächenabschnitt zwei benachbarte konvexe Rundungen verbindet.

Vorzugsweise schliessen die beiden Flächenabschnitte, welche sich der äusseren Umfangslinie bzw. der konvexen Rundung mit der äusseren Umfangslinie anschliessen, im Querschnitt durch die Mittelachse gesehen, einen Winkel α im Bereich von 55° bis 125°, insbesondere im Bereich von 70° und 100° oder im Bereich von 80° bis 95°, ein.

Vorzugsweise schliessen die beiden Flächenabschnitte, welche sich der inneren Umfangslinie bzw. der konvexen Rundung mit der inneren Umfangslinie anschliessen, im Querschnitt durch die Mittelachse gesehen, einen Winkel β im Bereich von 20° bis 85°, insbesondere im Bereich von 35° und 70° oder im Bereich von 40° bis 65°, ein. Vorzugsweise ist der Dichtring zur besagten Ebene symmetrisch ausgebildet. Durch die symmetrische Ausbildung ergeht der Vorteil, dass der Dichtring nicht lageorientiert in den Fitting eingesetzt werden muss.

Die Dichtringaufnahme weist einen ringflächigen Wandabschnitt auf, der sich vorzugsweise rechtwinklig zur Mittelachse erstreckt, und dass aussenseitig vom ringflächigen Wandabschnitt sich ein konischer Wandabschnitt sich in Richtung der Mittelachse derart erstreckt, dass sich der Innendurchmesser des konischen Wandabschnitts mit zunehmendem Abstand zum ringflächigen Wandabschnitt verkleinert.

Weiter ist der Übergang vom ringflächigen Wandabschnitt zum konischen Wandabschnitt als konkave Rundung ausgebildet ist. In der Ausgangslage liegt der Dichtring vorzugsweise in der besagten konkaven Rundung.

Vorzugsweise ist der Innendurchmesser des ringflächigen Wandabschnitts grösser als der Innendurchmesser des konischen Wandabschnitts an der durchmessermässig kleinsten Stelle.

Der Kontaktabschnitt des Dichtrings ist vorzugsweise der Abschnitt, welcher vom Innendurchmesser des ringflächigen Wandabschnitts her gesehen in Richtung der Mittelachse nach innen ragt.

Weiter ist der Dichtring in der Ausgangslage mit einer seitlichen Umfangslinie in Kontakt mit dem ringflächigen Wandabschnitt und mit der äusseren Umfangslinie in Kontakt mit dem konischen Wandabschnitt oder mit der konkaven Rundung ist.

Vorzugsweise gleitet der Dichtring bei der Bewegung von der Ausgangslage in die Kipplage mit der seitlichen Umfangslinie auf dem ringflächigen Wandabschnitt zur Mittelachse hin. Vorzugsweise kommt die äussere Umfangslinie in Kontakt mit dem ringflächigen Wandabschnitt.

Vorzugsweise ist in der Kipplage die seitliche Umfangslinie, welche in der Ausgangslage in Kontakt mit dem ringflächigen Wandabschnitt war, nicht in Kontakt mit dem ringflächigen Wandabschnitt. Die äussere Umfangslinie ist in Kontakt mit dem ringflächigen Wandabschnitt und die andere seitliche Umfangslinie ist in Kontakt mit dem konischen Wandabschnitt.

Vorzugsweise weist der Dichtring mindestens einen Durchgang auf, welcher in der Kipplage einen durchlässigen Spalt auf der Aussenseite des Rohrabschnitts und/oder der Innenseite der Dichtringaufnahme bereitstellt, derart, dass bei einer nicht erfolgten Verpressung oder einer fehlerhaften Verpressung des Fittings eine undichte Stelle vorhanden ist. Hierdurch kann der Installateur sehr schnell einen entsprechend falsch oder nicht verpressten Fitting identifizieren.

Der Durchgang kann sich in Richtung der Mittelachse erstrecken. Es ist aber auch denkbar, dass der Durchgang winklig geneigt zur Mittelachse erstreckt. Die Durchgänge können in gleichem Abstand zueinander um den Umfang verteilt sein, oder in unregelmässigen Abständen zueinander. Insbesondere sind die Durchgänge so angeordnet, dass bezüglich der Mittelachse die Durchgänge nicht gegenüber liegen. Dies hat Vorteil bezüglich der Verpressung.

Vorzugsweise wird der Aufnahmeraum im verpressten Zustand so verkleinert, dass der Dichtring an der Aussenseite des Rohrabschnitts über den gesamten Rohrumfang vollständig anliegt und dass der Dichtring an der Innenseite des Aufnahmeraums über den gesamten Umfang des Aufnahmeraums anliegt.

Der Dichtring ist vorzugsweise aus Kunststoff, insbesondere aus den Elastomeren FKM (Flourkarbon-Kautschuck), FPM (Fluor-Karbon-Kautschuk), HNBR (Hydrierter Acrylnitrilbutadien-Kautschuk), bevorzugt aus den Elastomeren CIIR (Chlorierter Butylkautschuk) und EPDM (Ethylen-Propylen-Dien-Monomer Kautschuk).

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Schnittansicht einer Ausführungsform einer erfindungsgemässen Anordnung mit einem Fitting, einem Dichtring und einem Rohrabschnitt im umgesteckten Zustand;
- Fig. 2: eine weitere Schnittansicht nach Figur 1 beim Vorgang des Einschiebens des Rohrabschnitts in den Fitting;
- Fig. 3: eine weitere Schnittansicht nach Figur 1 beim Vorgang des Einschiebens des Rohrabschnitts in den Fitting;
- Fig. 4: eine weitere Schnittansicht nach Figur 1 beim Vorgang des Einschiebens des Rohrabschnitts in den Fitting;
- Fig. 5: eine weitere Schnittansicht nach Figur 1 beim Vorgang des Einschiebens des Rohrabschnitts in den Fitting;
- Fig. 6: eine weitere Schnittansicht nach Figur 1 mit vollständig eingeschobenem Rohrabschnitt;
- Fig. 7: eine detaillierte Schnittansicht des Dichtrings nach Figur 1 ohne eingeschobenen Rohrabschnitt;
- Fig. 8: eine detaillierte Schnittansicht des Dichtrings nach Figur 1 mit eingeschobenem Rohrabschnitt;
- Fig. 9: eine perspektivische Anordnung des Dichtrings gemäss den vorhergehenden Figuren;
- Fig. 10: eine weitere perspektivische Anordnung des Dichtrings gemäss den vorhergehenden Figuren; und
- Fig. 11: eine Detailansicht der Dichtrings gemäss den vorhergehenden Figuren 1.

### BESCHREIBUNG BEVORZUGTER AUSFÜHRUNGSFORMEN

In den Figuren wird eine Ausführungsform einer erfindungsgemässen Anordnung gezeigt. Die Anordnung umfasst einen Dichtring 1, einen Fitting 2 und ein Rohrabschnitt 6. Der Fitting 2 und der Rohrabschnitt 6 werden miteinander verbunden und mit dem Dichtrichtung 1 wird ein Spalt zwischen dem Fitting 2 und dem Rohrabschnitt 6 gedichtet. Der Fitting 2 wird nach der Verbindung verpresst.

Der Dichtring 1 erstreckt sich um eine Mittelachse M herum. Die Mittelachse M verläuft dabei kollinear zur Mittelachse des Fittings 2 und des Rohrabschnitts 6.

Der Fitting 2 kann verschiedenartig ausgebildet sein. Beispielsweise als Fitting zur Verbindung zweier kollinear verlaufenden Rohren oder als T-Stück. In den gezeigten Ausführungsformen ist der Fitting jeweils nur ausschnittsweise dargestellt. Der Fitting 2 weist eine Dichtringaufnahme 3, einen Aufnahmeraum 4 und eine Presszone 5 auf. Der Dichtring 1 wird in die Dichtringaufnahme 3 eingesetzt. Der Aufnahmeraum 4 dient der Aufnahme des Rohrabschnitts 6. Über die Presszone 5 kann von aussen her eine Verpresskraft auf den Fitting 2 ausgeübt werden, so dass der Fitting 2 gegen den Rohrabschnitt 6 gepresst wird. Die Presszone 5 erstreckt sich über die Dichtringaufnahme 3 und über einen sich der Dichtringaufnahme anschliessenden zylindrischen Bereich 28 des Fittings 2. Die Dichtringaufnahme 3 weist einen freien Raumbereich 7 auf. Der freie Raumbereich 7 liegt in einer Einschubrichtung E des Rohrabschnitts 6 gesehen, hinter dem Dichtring 1.

Wie erwähnt ist der Fitting nur teilweise dargestellt. Der Fitting 2 kann sich gegenüber der Dichtringaufnahme 3 beliebig fortsetzen. Typischerweise weist der Fitting 2 noch weitere Aufnahmeräume und weitere Dichtringaufnahmen auf, so dass ein weiterer Rohrabschnitt oder weitere Rohrabschnitte mit dem Fitting 2 verbindbar sind.

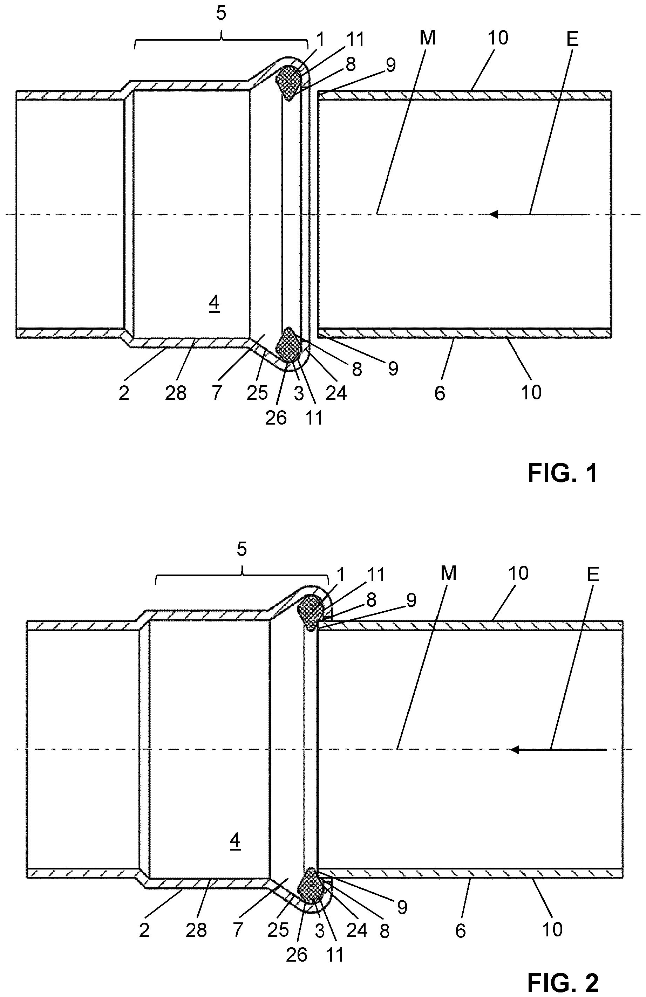

Ausgehend von der Position gemäss der Figur 1 wir der Rohrabschnitt 6 entlang einer Einschubrichtung E in den Aufnahmeraum 4 des Fittings 2 eingeschoben. Die Einschubrichtung E ist dabei im Wesentlichen parallel zur Mittelachse M. Der Dichtring 1 ragt in seiner Ausgangslage, wie in der Figur 1 gezeigt, mit einem Kontaktabschnitt 8 radial aus der Dichtringaufnahme 3 in den Aufnahmeraum 4 hinein. Der Dichtring 1 ragt dabei soweit in den Aufnahmeraum 4 hinein, dass der Dichtring 1 im Bereich des Kontaktabschnitts 8 mit der Stirnseite des Rohrabschnitts 6, welches in den Aufnahmeraum 4 eingeschoben wird, in Kontakt kommt. Dieser Kontakt wird in der Figur 2 entsprechend dargestellt. Hier kann gut erkannt werden, dass die Stirnseite 9 des Rohrabschnitts 6 mit dem Kontaktabschnitt 8 in Kontakt kommt. Bei weiteren Einschieben des Rohrabschnitts 6 in den Aufnahmeraum 4 wird der Dichtring 1 von der in den Figuren 1 und 2 gezeigten Ausgangslage in eine Kipplage gekippt.

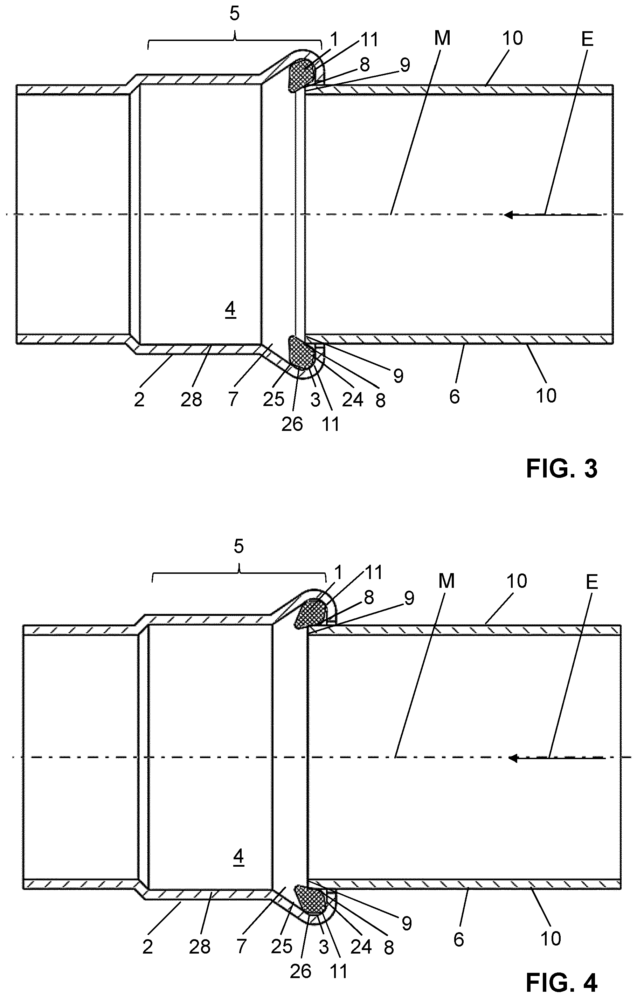

In den Figuren 3 und 4 befindet sich der Dichtring 1 zwischen der Ausgangslage und der Kipplage. Je weiter der Rohrabschnitt 6 entlang der Einschubrichtung E in den Aufnahmeraum eingeschoben wird, desto weiter wird der Dichtring 1 gekippt. Der Dichtring 1 kippt dabei von der Ausgangslage derart, dass der Kontaktabschnitt 8 in Richtung des freien Raumbereich 7 bewegt wird. Dabei kommt der Kontaktabschnitt 8 mindestens teilweise in den freien Raumbereich 7 zu liegen.

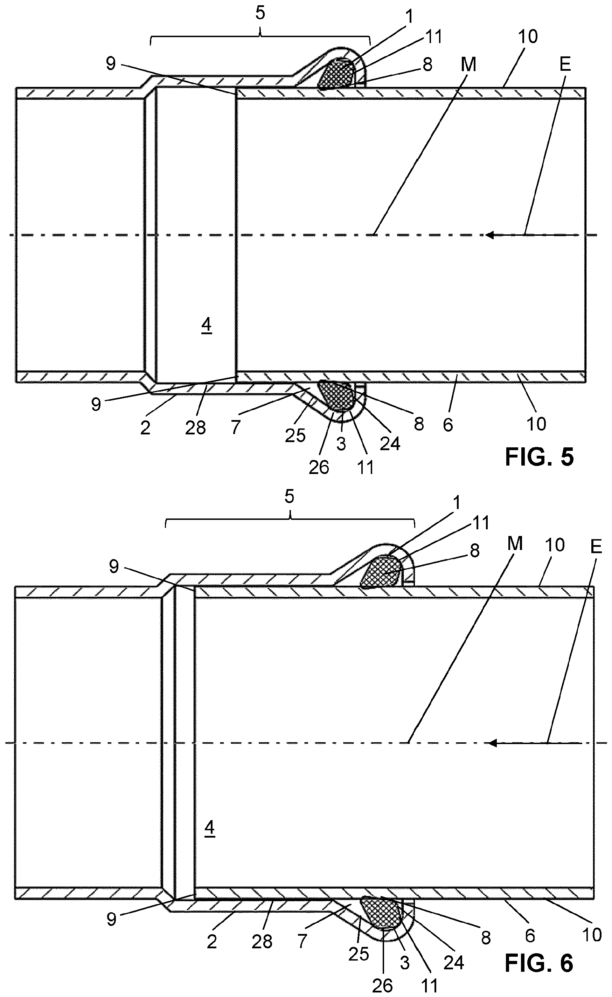

In der Figur 5 wird gezeigt, dass der Rohrabschnitt 6 schon soweit in den Aufnahmeraum 4 geschoben wurde, dass kein Kontakt mehr zwischen dem Kontaktabschnitt 8 und der Stirnseite 9 des Rohrabschnitts 6 vorhanden ist. Vielmehr liegt der Dichtring 1 mit dem Kontaktabschnitt 8 und einem Flächenbereich 11 auf der Aussenseite 10 des Rohrabschnitts 6 auf. In der Figur 6 befindet sich der Rohrabschnitt 6 in der vollständig eingeschobenen Lage.

Von der Figur 6 kann gut erkannt werden, dass der Dichtring 1 in der Kipplage derart liegt, dass der Dichtring 1 bei einer Zugkraft entgegen der Einschubrichtung E auf den Rohrabschnitt 6 gegen die Aussenseite 10 des Rohrabschnitts 6 gedrückt wird. Der Dichtring 1 wirkt somit auch als Haltemittel zwischen dem Fitting 2 und dem Rohrabschnitt 6. Ein Herausziehen des Rohrabschnitts 6 entgegen der Einschubrichtung E wird somit erschwert. Das Herausziehen wird aber nicht verunmöglicht, denn bei einer genügend grossen Kraft wird der Dichtring 1 entsprechend elastisch verformt und zwischen der Aussenseite 10 des Rohrabschnitts 6 und der Innenseite 29 des Aufnahmeraums 4 komprimiert. Die Haltekraft hat den Vorteil, dass der Fitting 2 auf dem Rohrabschnitt 6 platziert werden kann und dann in seiner Lage gehalten wird bzw. dass der Rohrabschnitt 6 zum Fitting 2 gehalten wird. Insbesondere bei Überkopfmontagen ist dies von Vorteil.

Der Dichtring 1 weist, wie oben bereits erwähnt, einen Flächenbereich 11 auf. Der Flächenbereich 11 liegt in Ausgangslage derart in Inneren des Aufnahmeraums 4, dass die Stirnseite 9 des Rohrabschnitts 6 beim Einschieben nicht in Kontakt mit dem Flächenbereich 11 kommt. Dies wird in den Figuren 1 und 2 gezeigt, wo der Flächenbereich 11 hinter einem ringflächigen Wandabschnitt 24 des Fittings liegt. Bei der Bewegung aus der Ausgangslage in die Kipplage wird der Flächenbereich 11 aus dem Inneren des Aufnahmeraums 4 aus dem Aufnahmeraum 4 hinaus zur Aussenseite des Rohrabschnitts 6 verschwenkt. In der Kipplage liegt der Flächenbereich 11 an der Aussenseite 10 des Rohrabschnitts 6 an. Diese Anordnung hat den Vorteil, dass ein Bereich des Dichtrings 1 mit der Aussenseite 10 in Kontakt kommt, welcher nicht mit der Stirnseite 9 des Rohrabschnitts in Kontakt gekommen ist.

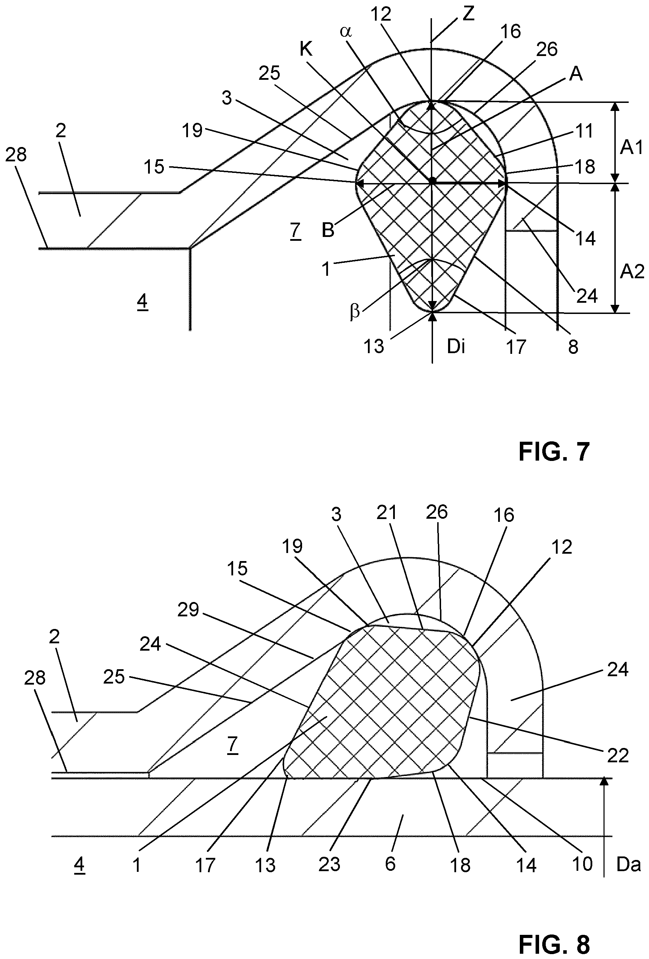

Anhand der Figuren 7 und 8 wird nun die spezifische und bevorzugte Ausführungsform des Querschnitts des Dichtrings 1 genauer erläutert. Der Dichtring 1 weist an seiner Aussenseite eine äussere Umfangslinie 12, eine innere Umfangslinie 13 und zwei seitliche Umfangslinien 14, 15 auf. Die äussere Umfangslinie 12 und die innere Umfangslinie 13 liegen in einer rechtwinklig zur Mittelachse M verlaufenden Ebene Z liegen. Die seitlichen Umfangslinien 14, 15 liegen in Richtung der Mittelachse M gesehen axial beabstandet zueinander. Die besagte Ebene Z liegt vorzugsweise mittig zwischen den beiden seitlichen Umfangslinien 14, 15.

Der radiale Abstand zwischen der äusseren Umfangslinie 12 und der inneren Umfangslinie 13 ist dabei grösser als der axiale Abstand zwischen den beiden seitlichen Umfangslinien 14, 15. Weiter liegen die seitlichen Umfangslinien 14, 15 bezüglich der Radialrichtung, die quer zur Mittelachse verläuft, näher bei der äusseren Umfangslinie 12 als bei der inneren Umfangslinie 13. In der Ausgangslage liegt die innere Umfangslinie 13 ausserhalb des Aufnahmeraums 4 und die seitlichen Umfangslinien 14, 15 sowie die äussere Umfangslinie 12 liegen im Inneren des Aufnahmeraums 4. In der Kipplage liegen eine der seitlichen Umfangslinien 14 und die innere Umfangslinie 13 ausserhalb des Aufnahmeraums 4 und eine der seitlichen Umfangslinien 15 sowie die äussere Umfangslinie 12 liegen im Inneren des Aufnahmeraums 4.

Die Umfangslinien 12, 13, 14, 15 werden in der gezeigten Ausführungsform durch jeweils eine Scheitellinie einer konvexen Rundung 16, 17, 18, 19 gebildet.

Der Dichtring weist aussenseitig weiter Flächenabschnitte 20, 21, 22, 23 auf. Jeweils ein Flächenabschnitt 20, 21, 22, 23 verbindet hier zwei benachbarte konvexe Rundungen 16, 17, 18, 19. In der gezeigten Ausführungsform erstrecken sich die Flächenabschnitte 20, 21, 22, 23 jeweils im Querschnitt durch die Mittelachse M gesehen als Gerade. Es wäre auch denkbar, dass die Flächenabschnitt 20, 21, 22, 23 konvex bombiert und konkav gerundet ausgebildet sind.

Die beiden Flächenabschnitte, welche sich der konvexen Rundung 16 mit der äusseren Umfangslinie 12 anschliessen, schliessen im Querschnitt durch die Mittelachse M gesehen, einen Winkel α im Bereich von 55° bis 125°, insbesondere im Bereich von 70° und 100° oder von 80° bis 95°, ein.

Die beiden Flächenabschnitte, welche sich der konvexen Rundung 17 mit der inneren Umfangslinie 13anschliessen, schliessen im Querschnitt durch die Mittelachse M gesehen, einen Winkel β im Bereich von 20° bis 85°, insbesondere im Bereich von 35° und 70° oder von 40° bis 65°, ein.

Vorzugsweise sind die Winkel α und β nicht gleich, sondern unterschiedlich zueinander. Wie erwähnt liegen die seitlichen Umfangslinien näher zur äusseren Umfangslinie 12 als zur inneren Umfangslinie 13. Vorzugsweise liegt der Abstand A1 rechtwinklig zur Mittelachse M gesehen zwischen der äusseren Umfangslinie 12 und seitlichen Umfangslinie 14, 15 zwischen 30% und 48% des Abstandes A rechtwinklig zur Mittelachse M gesehen zwischen der äusseren Umfangslinie 12 und der inneren Umfangslinie 13. Demgemäss liegt der Abstand A2 rechtwinklig zur Mittelachse M gesehen zwischen der inneren Umfangslinie 13 und seitlichen Umfangslinie 14, 15 zwischen 52% und 70% des Abstandes A rechtwinklig zur Mittelachse M gesehen zwischen der äusseren Umfangslinie 12 und der inneren Umfangslinie 13.

Der Abstand zwischen den beiden seitlichen Umfangslinien 14, 15 in Richtung der Mittelachse gesehen, trägt das Bezugszeichen B. Vorzugseise liegt der Abstand B zwischen 60% und 85% des Abstandes A.

Bei einem Aussendurchmesser des Rohrabschnitts im Bereich von 12 bis 54 Millimeter, liegt der Abstand A im Bereich von 2.5 bis 7.5 Millimeter. Der Abstand A kann je nach Mass des Aussendurchmessers des Rohrabschnitts stetig oder Sprunghaft zunehmen. Der Abstand B liegt zwischen 2.0 und 5.0 Millimeter. Der Abstand B kann je nach Mass des Aussendurchmessers des Rohrabschnitts stetig oder Sprunghaft zunehmen.

Von den Figuren 7 und 8 ist weiter der Aufnahmeraum 4 ersichtlich. Der Aufnahmeraum 4 weist einen ringflächigen Wandabschnitt 24 auf, der sich vorzugsweise rechtwinklig zur Mittelachse M erstreckt. Von der Aussenseite des ringflächigen Wandabschnitts 24 erstreckt sich ein konischer Wandabschnitt 25 in Richtung der Mittelachse M derart, dass sich der Innendurchmesser des konischen Wandabschnitts 25 mit zunehmendem Abstand zum ringflächigen Wandabschnitt 24 verkleinert. Der oben erwähnte freie Raumbereich 7 liegt in dem Bereich des Aufnahmeraums 4, welcher durch den konischen Wandabschnitt 24 begrenzt ist. Der Übergang vom ringflächigen Wandabschnitt 24 zum konischen Wandabschnitt 25 ist hier als konkave Rundung 26 ausgebildet.

Der Aufnahmeraum 4 wird im verpressten Zustand so verkleinert, dass der Dichtring 1 an der Aussenseite 10 des Rohrabschnitts 6 über den gesamten Rohrumfang vollständig anliegt und dass der Dichtring 1 an der Innenseite des Aufnahmeraums 4 über den gesamten Umfang des Aufnahmeraums 4 anliegt.

In der Figur 7 ist weiterhin der Innendurchmesser Di des Dichtrings 1 eingezeichnet. Der Innendurchmesser Di des Dichtrings 1 ist in der Ausgangslage kleiner als der Aussendurchmesser Da des Rohrabschnitts 6. Der Aussendurchmesser Da ist in der Figur 8 eingezeichnet.

Der Fitting 2 weist in Einschubrichtung E gesehen vor dem Aufnahmeraum 4 einen Durchmesser auf, welcher leicht grösser ist als der Durchmesser nach dem Aufnahmeraum 4. Der Kontaktabschnitt 8 ist dabei der Abschnitt, welcher aus der Dichtringaufnahme 3 in den Aufnahmeraum 4 einragt. In der gezeigten Ausführungsform ist der Kontaktabschnitt 8 der Bereich des Dichtrings 1, welcher sich von der Mittelachse M gesehen auf den Durchmesser des Fittings 2 vor dem Aufnahmeraum 4 erstreckt. Mit anderen Worten gesagt ist der Kontaktabschnitt 8 der Bereich des Fittings, welcher in Richtung der Mittelachse M in Einschubrichtung E gesehen, sichtbar ist.

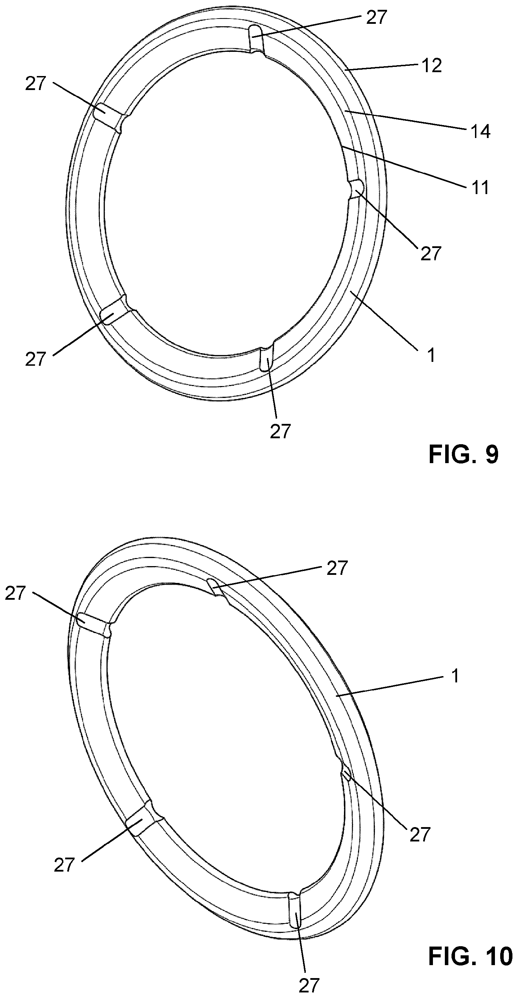

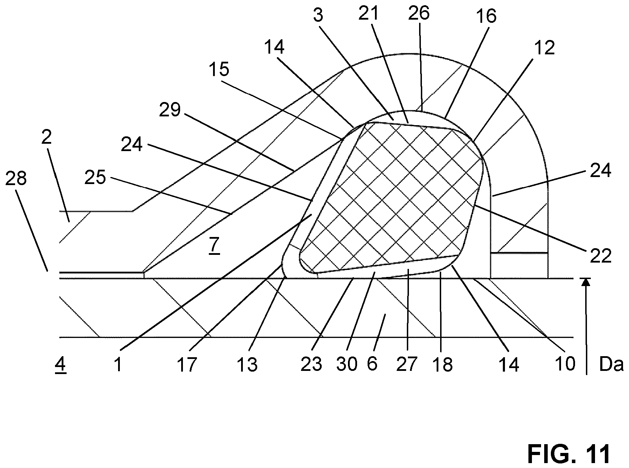

In den Figuren 9 und 10 wird der Dichtring perspektivisch gezeigt. Der Dichtring 1 weist in einer besonders bevorzugten Ausführung mindestens einen optionalen Durchgang 27 auf. Der Durchgang 27 stellt in der Kipplage einen durchlässigen Spalt auf der Aussenseite 10 des Rohrabschnitts 6 bereit, derart, dass bei einer nicht erfolgten Verpressung oder einer fehlerhaften Verpressung des Fittings 2 eine undichte Stelle vorhanden ist. Diese undichte Stelle trägt in der Figur 11 das Bezugszeichen 30.

### BEZUGSZEICHENLISTE

| | | | |
|---|---|---|---|
| 1 | Dichtring | 26 | konkave Rundung |
| 2 | Fitting | 27 | Durchgang |
| 3 | Dichtringaufnahme | 28 | zylindrischer Bereich |
| 4 | Aufnahmeraum | 29 | Innenseite |
| 5 | Presszone | 30 | undichte Stelle |
| 6 | Rohrabschnitt | | |
| 7 | freier Raumbereich | A | Abstand |
| 8 | Kontaktabschnitt | A1 | Abstand |
| 9 | Stirnseite | A2 | Abstand |
| 10 | Aussenseite | B | Abstand |
| 11 | Flächenbereich | E | Einschubrichtung |
| 12 | äussere Umfangslinie | M | Mittelachse |
| 13 | innere Umfangslinie | K | Kipplinie |
| 14 | seitliche Umfangslinie | Di | Innendurchmesser Dichtring |
| 15 | seitliche Umfangslinie | Da | Aussendurchmesser Rohr |
| 16 | konvexe Rundung | Z | Ebene |
| 17 | konvexe Rundung | α | Winkel |
| 18 | konvexe Rundung | β | Winkel |
| 19 | konvexe Rundung | | |
| 20 | Flächenabschnitt | | |
| 21 | Flächenabschnitt | | |
| 22 | Flächenabschnitt | | |
| 23 | Flächenabschnitt | | |
| 24 | ringflächiger Wandabschnitt | | |
| 25 | konischer Wandabschnitt | | |

## Patentansprüche

1. Anordnung umfassend
einen Dichtring (1), der sich um eine Mittelachse (M) herum erstreckt,
einen Fitting (2) mit einer Dichtringaufnahme (3), in welche der Dichtring (1) eingesetzt ist, einem Aufnahmeraum (4) und einer Presszone (5), welche mechanisch verpressbar ist, und
einen Rohrabschnitt (6), welcher entlang einer Einschubrichtung (E) in den Aufnahmeraum (4) des Fittings (2) einschiebbar ist,
wobei die Dichtringaufnahme (3) in Einschubrichtung (E) hinter dem Dichtring gesehen einen freien Raumbereich (7) aufweist,
wobei der Dichtring (1) mit einem Kontaktabschnitt (8) radial aus der Dichtringaufnahme (3) in den Aufnahmeraum (4) ragt, derart, dass die Stirnseite (9) des Rohrabschnitts (6) beim Einschieben des Rohrabschnitts (6) mit dem Kontaktabschnitt (8) in Kontakt bringbar ist, und
wobei beim Einschieben des Rohrabschnitts (6) in Einschubrichtung (E) der Dichtring (1) von einer Ausgangslage in eine Kipplage kippt, derart, dass der Kontaktabschnitt (8) in Richtung des freien Raumbereichs (7) bewegbar ist und mindestens teilweise in den freien Raumbereich (7) zu liegen kommt
wobei der Dichtring (1) eine äussere Umfangslinie (12), eine innere Umfangslinie (13) und zwei seitliche Umfangslinien (14, 15) aufweist, wobei die äussere Umfangslinie (12) und die innere Umfangslinie (13) in einer rechtwinklig zur Mittelachse verlaufenden Ebene (Z) liegen, wobei die seitlichen Umfangslinien (14, 15) in Richtung der Mittelachse (M) gesehen axial beabstandet zueinander liegen,
**dadurch gekennzeichnet dass** die Dichtringaufnahme (3) einen ringflächigen Wandabschnitt (24) aufweist, der sich vorzugsweise rechtwinklig zur Mittelachse (M) erstreckt, wobei sich aussenseitig vom ringflächigen Wandabschnitt (24) ein konischer Wandabschnitt (25) derart in Richtung der Mittelachse (M) erstreckt, dass sich der Innendurchmesser des konischen Wandabschnitts (25) mit zunehmendem Abstand zum ringflächigen Wandabschnitt (24) verkleinert, und wobei der Übergang vom ringflächigen Wandabschnitt (24) zum konischen Wandabschnitt (25) als konkave Rundung (26) ausgebildet ist, und
wobei der Dichtring (1) in der Ausgangslage mit einer seitlichen Umfangslinie (14) in Kontakt mit dem ringflächigen Wandabschnitt (24) und mit der äusseren Umfangslinie (12) in Kontakt mit dem konischen Wandabschnitt (25) oder mit der konkaven Rundung (26) ist.

2. Anordnung nach Anspruch 1, **dadurch gekennzeichnet, dass** der Dichtring (1) in der Kipplage derart liegt, dass der Dichtring (1) bei einer Zugkraft entgegen der Einschubrichtung (E) auf den Rohrabschnitt (6) gegen die Aussenseite (10) des Rohrabschnitts (6) gedrückt wird, wodurch ein Herausziehen des Rohrabschnitts (6) entgegen der Einschubrichtung (E) erschwert ist.

3. Anordnung nach Anspruch 1 oder 2, **dadurch gekennzeichnet, dass** der Innendurchmesser (Di) des Dichtrings (1) in der Ausgangslage kleiner als der Aussendurchmesser (Da) des Rohrabschnitts (6) ist.

4. Anordnung nach einem der vorhergehenden Ansprüche, **dadurch gekennzeichnet, dass** der Dichtring (1) einen Flächenbereich (11) aufweist, welcher in der Ausgangslage im Inneren des Aufnahmeraums (4) liegt, derart, dass die Stirnseite (9) des Rohrabschnitts (6) beim Einschieben nicht in Kontakt mit dem Flächenbereich (11) kommt, und welcher bei der Bewegung aus der Ausgangslage in die Kipplage aus dem Inneren des Aufnahmeraums (4) aus dem Aufnahmeraum (4) zur Aussenseite (10) des Rohrabschnitts (6) verschwenkt wird.

5. Anordnung nach einem der vorhergehenden Ansprüche, **dadurch gekennzeichnet**, dassdie besagte Ebene (Z) vorzugsweise mittig zwischen den beiden seitlichen Umfangslinien (14, 15) liegt.

6. Anordnung nach Anspruch 5, **dadurch gekennzeichnet, dass** die Umfangslinien (12, 13, 14, 15) durch eine Scheitellinie einer jeweiligen konvexen Rundung (16, 17, 18, 19) der Aussenfläche des Dichtrings (1) gebildet werden.

7. Anordnung nach Anspruch 5 oder 6, **dadurch gekennzeichnet, dass** der Dichtring aussenseitig Flächenabschnitte (20, 21, 22, 23) aufweist, wobei jeweils ein Flächenabschnitt (20, 21, 22, 23) zwei benachbarte Umfangslinien (12, 13, 14, 15) verbindet; oder Anordnung nach Anspruch 6, **dadurch gekennzeichnet, dass** der Dichtring aussenseitig Flächenabschnitte (20, 21, 22, 23) aufweist, wobei jeweils ein Flächenabschnitt (20, 21, 22, 23) zwei benachbarte konvexe Rundungen (16, 17, 18, 19) verbindet.

8. Anordnung nach Anspruch 7, **dadurch gekennzeichnet,**
**dass** die beiden Flächenabschnitte, welche sich der äusseren Umfangslinie (12) bzw. der konvexen Rundung (16) mit der äusseren Umfangslinie (12) anschliessen, im Querschnitt durch die Mittelachse (M) gesehen, einen Winkel (α) im Bereich von 55° bis 125°, insbesondere im Bereich von 70° und 100° oder im Bereich von 80° bis 95°, einschliessen; und/oder
**dass** die beiden Flächenabschnitte, welche sich der inneren Umfangslinie (13) bzw. der konvexen Rundung (17) mit der inneren Umfangslinie (13) anschliessen, im Querschnitt durch die Mittelachse (M) gesehen, einen Winkel (β) im Bereich von 20° bis 85°, insbesondere im Bereich von 35° und 65°, einschliessen.

9. Anordnung nach einem der vorhergehenden Ansprüche 5 bis 8, **dadurch gekennzeichnet, dass** ist der Dichtring (1) zur besagten Ebene (Z) symmetrisch ausgebildet ist.

10. Anordnung nach einem der vorhergehenden Ansprüche, **dadurch gekennzeichnet, dass** der Dichtring (1) bei der Bewegung von der Ausgangslage in die Kipplage mit der seitlichen Umfangslinie (14) auf dem ringflächigen Wandabschnitt (24) zur Mittelachse (M) hin gleitet und dass das die äussere Umfangslinie (12) in Kontakt mit dem ringflächigen Wandabschnitt (24) kommt.

11. Anordnung nach einem der vorhergehenden Ansprüche, **dadurch gekennzeichnet, dass** in der Kipplage die seitliche Umfangslinie (14), welche in der Ausgangslage in Kontakt mit dem ringflächigen Wandabschnitt (24) war, nicht in Kontakt mit dem ringflächigen Wandabschnitt (24) ist, dass die äussere Umfangslinie (12) in Kontakt mit dem ringflächigen Wandabschnitt (24) ist und dass die andere seitliche Umfangslinie (15) in Kontakt mit dem konischen Wandabschnitt (25) ist.

12. Anordnung nach einem der vorhergehenden Ansprüche, **dadurch gekennzeichnet, dass** der Dichtring (1) mindestens einen Durchgang (27) aufweist, welcher in der Kipplage einen durchlässigen Spalt auf der Aussenseite (10) des Rohrabschnitts (6) und/oder der Innenseite der Dichtringaufnahme (3) bereitstellt, derart, dass bei einer nicht erfolgten Verpressung oder einer fehlerhaften Verpressung des Fittings (2) eine undichte Stelle vorhanden ist.

13. Anordnung nach einem der vorhergehenden Ansprüche, **dadurch gekennzeichnet, dass** der Aufnahmeraum (4) im verpressten Zustand so verkleinert wird, dass der Dichtring (1) an der Aussenseite (10) des Rohrabschnitts (6) über den gesamten Rohrumfang vollständig anliegt und dass der Dichtring (1) an der Innenseite des Aufnahmeraums (4) über den gesamten Umfang des Aufnahmeraums (4) anliegt.

## Claims

1. Arrangement comprising
a sealing ring (1) that extends around a central axis (M),
a fitting (2) with a sealing ring receptacle (3) into which the sealing ring (1) is inserted, a receiving space (4) and a pressing zone (5) which can be mechanically pressed, and
a pipe section (6) which can be pushed into the receiving space (4) of the fitting (2) along an insertion direction (E),
wherein the sealing ring receptacle (3) has a free space region (7) behind the sealing ring when viewed in the insertion direction (E),
wherein the sealing ring (1) projects with a contact section (8) radially out of the sealing ring receptacle (3) into the receiving space (4) in such a way that the end face (9) of the pipe section (6) can be brought into contact with the contact section (8) when the pipe section (6) is pushed in, and
the sealing ring (1) tilting from an initial position into a tilted position when the pipe section (6) is pushed in in the direction of insertion (E), in such a way that the contact section (8) can be moved in the direction of the free space region (7) and comes to rest at least partially in the free space region (7)
wherein the sealing ring (1) has an outer circumferential line (12), an inner circumferential line (13) and two lateral circumferential lines (14, 15), wherein the outer circumferential line (12) and the inner circumferential line (13) lie in a plane (Z) extending at right angles to the central axis, wherein the lateral circumferential lines (14, 15) lie axially spaced apart from one another as seen in the direction of the central axis (M), **characterized in that** the outer circumferential line (12) and the inner circumferential line (13) lie in a plane (Z) extending at right angles to the central axis (M),
**characterized in that** the sealing ring receptacle (3) has an annular wall section (24) which preferably extends at right angles to the central axis (M), a conical wall section (25) extending on the outside of the annular wall section (24) in the direction of the central axis (M) in such a way that the inner diameter of the conical wall section (25) decreases with increasing distance from the annular wall section (24), and wherein the transition from the annular wall section (24) to the conical wall section (25) is formed as a concave rounding (26), and
wherein the sealing ring (1) is in the initial position with a lateral circumferential line (14) in contact with the annular wall section (24) and with the outer circumferential line (12) in contact with the conical wall section (25) or with the concave rounding (26).

2. Arrangement according to claim 1, **characterized in that** the sealing ring (1) lies in the tilted position in such a way that the sealing ring (1) is pressed against the outside (10) of the pipe section (6) when a tensile force is applied to the pipe section (6) against the direction of insertion (E), making it more difficult to pull out the pipe section (6) against the direction of insertion (E).

3. Arrangement according to claim 1 or 2, **characterized in that** the inside diameter (Di) of the sealing ring (1) in the initial position is smaller than the outside diameter (Da) of the pipe section (6)

4. Arrangement according to one of the preceding claims, **characterized in that** the sealing ring (1) has a surface area (11) which, in the initial position, is located inside the receiving space (4) in such a way that the end face (9) of the pipe section (6) does not come into contact with the surface area (11) during insertion, and which is pivoted out of the receiving space (4) towards the outside (10) of the pipe section (6) during the movement from the initial position into the tilting position from the inside of the receiving space (4).

5. Arrangement according to one of the preceding claims, **characterized in that** said plane (Z) is preferably located centrally between the two lateral circumferential lines (14, 15).

6. Arrangement according to claim 5, **characterized in that** the circumferential lines (12, 13, 14, 15) are formed by an apex line of a respective convex curve (16, 17, 18, 19) of the outer surface of the sealing ring (1)

7. Arrangement according to claim 5 or 6, **characterized in that** the sealing ring has surface sections (20, 21, 22, 23) on the outside, in each case one surface section (20, 21, 22, 23) connecting two adjacent circumferential lines (12, 13, 14, 15); or arrangement according to claim 6, **characterized in that** the sealing ring has surface sections (20, 21, 22, 23) on the outside, in each case one surface section (20, 21, 22, 23) connecting two adjacent convex curves (16, 17, 18, 19).

8. Arrangement according to claim 7, **characterized in that**
**in that** the two surface sections which adjoin the outer circumferential line (12) or the convex rounding (16) with the outer circumferential line (12) form an angle (α ) in the range from 55° to 125°, in particular in the range from 70° and 100° or in the range from 80° to 95°, when viewed in cross-section through the central axis (M); and/or
**in that** the two surface sections, which adjoin the inner circumferential line (13) or the convex rounding (17) with the inner circumferential line (13), enclose an angle (β ) in the range from 20° to 85°, in particular in the range from 35° and 65°, when viewed in cross-section through the central axis (M).

9. Arrangement according to one of the preceding claims 5 to 8, **characterized in that** the sealing ring (1) is designed symmetrically to said plane (Z).

10. Arrangement according to one of the preceding claims, **characterized in that** the sealing ring (1) slides with the lateral circumferential line (14) on the annular wall section (24) towards the central axis (M) during the movement from the initial position to the tilting position and that the outer circumferential line (12) comes into contact with the annular wall section (24).

11. Arrangement according to one of the preceding claims, **characterized in that** in the tilted position the lateral circumferential line (14), which was in contact with the annular wall section (24) in the initial position, is not in contact with the annular wall section (24), that the outer circumferential line (12) is in contact with the annular wall section (24) and that the other lateral circumferential line (15) is in contact with the conical wall section (25).

12. Arrangement according to one of the preceding claims, **characterized in that** the sealing ring (1) has at least one passage (27) which, in the tilted position, provides a permeable gap on the outside (10) of the pipe section (6) and/or the inside of the sealing ring receptacle (3), such that a leak is present if the fitting (2) has not been pressed or has been pressed incorrectly.

13. Arrangement according to one of the preceding claims, **characterized in that** the receiving space (4) is reduced in size in the pressed state in such a way that the sealing ring (1) bears completely against the outside (10) of the pipe section (6) over the entire circumference of the pipe and that the sealing ring (1) bears against the inside of the receiving space (4) over the entire circumference of the receiving space (4).

## Revendications

1. Agencement comprenant
un joint d'étanchéité (1) qui s'étend autour d'un axe central (M),
un raccord (2) avec un logement de joint d'étanchéité (3), dans lequel le joint d'étanchéité (1) est inséré, un espace de réception (4) et une zone de compression (5), qui peut être comprimée mécaniquement, et
un tronçon de tube (6) qui peut être inséré dans l'espace de réception (4) du raccord (2) le long d'une direction d'insertion (E),
le logement de joint d'étanchéité (3) présentant, vu dans le sens d'insertion (E) derrière le joint d'étanchéité, une zone d'espace libre (7),
le joint d'étanchéité (1) dépassant radialement par une section de contact (8) du logement de joint d'étanchéité (3) dans l'espace de réception (4), de telle sorte que la face frontale (9) du tronçon de tube (6) puisse être amenée en contact avec la section de contact (8) lors de l'insertion du tronçon de tube (6), et
lors de l'insertion du tronçon de tube (6) dans le sens d'insertion (E), le joint d'étanchéité (1) basculant d'une position initiale à une position basculée, de telle sorte que la section de contact (8) puisse être déplacé en direction de la zone d'espace libre (7) et vienne se placer au moins partiellement dans la zone d'espace libre (7)
le joint d'étanchéité (1) présentant une ligne périphérique extérieure (12), une ligne périphérique intérieure (13) et deux lignes périphériques latérales (14, 15), la ligne périphérique extérieure (12) et la ligne périphérique intérieure (13) étant situées dans un plan (Z) s'étendant perpendiculairement à l'axe central, les lignes périphériques latérales (14, 15) étant situées à une distance axiale l'une de l'autre, vu dans la direction de l'axe central (M),
**caractérisé en ce que** le logement de joint d'étanchéité (3) présente une section de paroi annulaire (24) qui s'étend de préférence à angle droit par rapport à l'axe central (M), une section de paroi conique (25) s'étendant du côté extérieur de la section de paroi annulaire (24) dans la direction de l'axe central (M) de telle sorte que le diamètre intérieur de la section de paroi conique (25) diminue avec l'augmentation de la distance par rapport à la section de paroi annulaire (24), et que la transition entre la section de paroi annulaire (24) et la section de paroi conique (25) est réalisée sous la forme d'un arrondi concave (26), et
la bague d'étanchéité (1) étant, dans la position initiale, en contact par une ligne périphérique latérale (14) avec la section de paroi annulaire (24) et en contact par la ligne périphérique extérieure (12) avec la section de paroi conique (25) ou avec l'arrondi concave (26).

2. Agencement selon la revendication 1, **caractérisé en ce que** dans la position basculée, le joint d'étanchéité (1) se trouve de telle sorte que le joint d'étanchéité (1) soit pressé contre le côté extérieur (10) du tronçon de tube (6) lors d'une force de traction exercée à l'encontre de la direction d'insertion (E) sur le tronçon de tube (6), ce qui rend plus difficile une extraction du tronçon de tube (6) à l'encontre de la direction d'insertion (E).

3. Agencement selon la revendication 1 ou 2, **caractérisé en ce que** le diamètre intérieur (Di) du joint d'étanchéité (1) dans la position initiale est inférieur au diamètre extérieur (Da) du tronçon de tube (6).

4. Agencement selon l'une quelconque des revendications précédentes, **caractérisé en ce que** le joint d'étanchéité (1) présente une zone de surface (11) qui, dans la position initiale, se trouve à l'intérieur de l'espace de réception (4), de telle sorte que la face frontale (9) du tronçon de tube (6) n'entre pas en contact avec la zone de surface (11) lors de l'insertion, et qui, lors du déplacement de la position initiale vers la position basculée, est pivotée de l'intérieur de l'espace de réception (4) vers la face extérieure (10) du tronçon de tube (6).

5. Agencement selon l'une quelconque des revendications précédentes, **caractérisé en ce que** ledit plan (Z) est de préférence centré entre les deux lignes périphériques latérales (14, 15).

6. Agencement selon la revendication 5, **caractérisé en ce que** les lignes périphériques (12, 13, 14, 15) sont formées par une ligne de sommet d'un arrondi convexe respectif (16, 17, 18, 19) de la surface extérieure du joint d'étanchéité (1).

7. Agencement selon la revendication 5 ou 6, **caractérisé en ce que** le joint d'étanchéité présente du côté extérieur des sections de surface (20, 21, 22, 23), une section de surface (20, 21, 22, 23) reliant respectivement deux lignes périphériques voisines (12, 13, 14, 15) ; ou agencement selon la revendication 6, **caractérisé en ce que** le joint d'étanchéité présente du côté extérieur des sections de surface (20, 21, 22, 23), une section de surface (20, 21, 22, 23) reliant respectivement deux arrondissements convexes voisins (16, 17, 18, 19).

8. Agencement selon la revendication 7, **caractérisé en ce**
**que** les deux sections de surface qui se raccordent à la ligne périphérique extérieure (12) ou à l'arrondi convexe (16) avec la ligne périphérique extérieure (12), vues en coupe transversale à travers l'axe central (M), forment un angle (α) dans la plage de 55° à 125°, en particulier dans la plage de 70° et 100° ou dans la plage de 80° à 95° ; et/ou
en ce que les deux sections de surface qui se raccordent à la ligne périphérique intérieure (13) ou à l'arrondi convexe (17) avec la ligne périphérique intérieure (13), vues en coupe transversale à travers l'axe central (M), forment un angle (β) dans la plage de 20° à 85°, en particulier dans la plage de 35° et 65°.

9. Agencement selon l'une des revendications précédentes 5 à 8, **caractérisé en ce que** la bague d'étanchéité (1) est symétrique par rapport audit plan (Z).

10. Agencement selon l'une quelconque des revendications précédentes, **caractérisé en ce que** la bague d'étanchéité (1), lors du mouvement de la position initiale à la position basculée, glisse avec la ligne périphérique latérale (14) sur la section de paroi annulaire (24) vers l'axe central (M) et **en ce que** la ligne périphérique extérieure (12) vient en contact avec la section de paroi annulaire (24).

11. Agencement selon l'une quelconque des revendications précédentes, **caractérisé en ce que**, dans la position basculée, la ligne périphérique latérale (14) qui était en contact avec la section de paroi annulaire (24) dans la position initiale n'est pas en contact avec la section de paroi annulaire (24), **en ce que** la ligne périphérique extérieure (12) est en contact avec la section de paroi annulaire (24) et **en ce que** l'autre ligne périphérique latérale (15) est en contact avec la section de paroi conique (25).

12. Agencement selon l'une quelconque des revendications précédentes, **caractérisé en ce que** le joint d'étanchéité (1) présente au moins un passage (27) qui, en position basculée, fournit une fente perméable sur le côté extérieur (10) du tronçon de tube (6) et/ou sur le côté intérieur du logement de joint d'étanchéité (3), de telle sorte qu'en cas de non-compression ou de compression défectueuse du raccord (2), il existe une zone non-étanche.

13. Agencement selon l'une quelconque des revendications précédentes, **caractérisé en ce que** l'espace de réception (4) est réduit à l'état comprimé de telle sorte que le joint d'étanchéité (1) s'applique complètement contre le côté extérieur (10) du tronçon de tube (6) sur toute la circonférence du tube et que le joint d'étanchéité (1) s'applique contre le côté intérieur de l'espace de réception (4) sur toute la circonférence de l'espace de réception (4).
